# EUROPEAN PATENT SPECIFICATION

(11) **EP 1 746 074 B1**
(45) Date of publication and mention of the grant of the patent: **20.11.2013**
(21) Application number: 06000440.5
(22) Date of filing: 11.01.2006
(51) Int. Cl.: C01G 49/14, C23G 1/36

(54) **Process for making iron sulphate**
Verfahren zur Herstellung von Eisensulfat
Procédé de préparation de sulfate de fer

(30) Priority: 10.02.2005 IT PI20050015
(43) Date of publication of application: 24.01.2007
(73) Proprietor: Tioxide Europe S.R.L., 58020 Scarlino GR (IT); DELL'Omodarme, Mario Alberto, 56124 Pisa PI (IT)
(72) Inventor: Dell'Omodarme, Mario Alberto, 56124 Pisa (IT); Baronti, Rutilio, 58020 Puntone Scarlino (GR) (IT)
(74) Representative: Celestino, Marco

(56) References cited:
- EP-A- 0 316 487
- GB-A- 957 464
- US-A- 1 667 693
- US-A- 3 760 069
- US-A- 5 968 229

## Description

### Field of the invention

The present invention relates to a production process for making iron sulphate, and in particular it relates to a production process for making iron sulphate starting from industrial waste liquids.

### Description of the prior art

Normally, iron sulphate is produced using industrial waste liquids coming from chemical processes, such as the production of titanium dioxide by the sulphate process, or from technological processes, such as pickling process metal sheets or iron products in general.

In the production of titanium dioxide by the sulphate process, which uses as starting ore ilmenite (50% TiO₂) or deironed ilmenite (80% TiO₂), a huge amount of exhaust sulphuric acid as main waste is produced. Also in the case of pickling, the waste liquid contains still high percentage of free sulphuric acid. In both cases, the acid waste water must be completely neutralised or be subject to processes that exploit its acid fraction, such as feeding scrap iron for making iron sulphate heptahydrate. In addition to the two cases above cited, other processes exist from which waste acid liquids derive containing salts, and that are susceptible of recovering part of free acidity by reaction with scrap iron for making iron sulphate.

Different processes are known for making iron sulphate or copperas. One process is described in US 1,667,693, providing as starting solution an acid "sludge" coming from pickling of iron by-products. This acid "sludge" contains, among impurities of various type, especially iron sulphate in solution with presence of free sulphuric acid. The process provides the reaction with the scrap iron by the residue acidity of the sludge and a cooling step for the precipitation of iron sulphate heptahydrate. In this process the iron sulphate is produced only by feeding scrap iron, from which high production costs arise, due to relatively high cost of the scrap iron.

Other processes are described in US 2,771,342 and GB 957,464. They provide steps that confer additional features to the final products (iron oxide pigments, etc.) and are not suitable for making an intermediate product of lower cost.

In US 1667693 a "sludge" deriving from cleansing scale from iron residues is put into a "pickling" liquor consisting of sulphuric acid and water. The scale is dissolved in the sulphuric acid obtaining ferrous sulphate and sulphuric acid. The sulphuric acid of the "sludge" reacts with scrap iron obtaining iron sulphate. The iron of ferrous sulphate is obtained substantially by the iron added as scrap, with relevant raw material costs.

In US 5968229 solutions containing metals are purified using magnetite and/or metallic iron.

### Summary of the invention

It is therefore a feature of the invention to provide an iron sulphate production process that is cheaper than processes of prior art concerning both energy consumption costs and material costs.

These and other features are accomplished with one exemplary iron sulphate production process, according to the invention, comprising:
- a first reaction where a starting solution containing sulphuric acid (H₂SO₄) is caused to react with a measured amount of iron scale (Fe₃O₄) obtaining an intermediate solution containing iron sulphate (FeSO₄) and ferric sulphate (Fe₂(SO₄)₃),
- a second reaction where the intermediate solution is caused to react with scrap iron turning the present ferric sulphate (Fe₂(SO₄)₃) into iron sulphate (FeSO₄), whereby in the final solution the iron sulphate (FeS0₄) is the only iron based compound.

In particular, the above described first and second reaction are carried out separately, and preferably for the two reactions different times and reactors are used.

This way, by advancing the first reaction the overall amount of scrap iron required for making the iron sulphate is minimized. More in detail, a reaction at the same time of iron scale and scrap iron, carried out in a single reactor, would not allow to exploit adequately the contribution of the scale. This occurs because the sulphuric acid has a preferential reaction with the scrap iron. Instead, according to the preferred embodiment of the invention, only a part of the required iron (less than 40%) is supplied through scrap iron whereas most of iron is supplied through iron scale, which comes from the cycles for making steel, whose cost with respect to scrap iron is about ten times lower.

In particular, the starting solution based on sulphuric acid can be selected from the group comprised of:
- waste material from the industry for making titanium dioxide,
- exhausted solutions of various nature containing acid fractions, waste pickling water, etc.
- fresh acid.

Advantageously, the first reaction is carried out at a temperature set between 60 and 95°C, and, preferably in a temperature range between 70 and 90°C. Most favourably, the first redaction is carried out at a temperature set between 75 and 85°C.

Advantageously, the first reaction is stopped near the limit of solubility of the iron sulphate in its "mother water", whereby the crystallization is avoided of the iron sulphate that, depositing on the scrap iron, would interfere with the reaction.

At the end of the second reaction the final solution obtained is advantageously cooled up to bringing it to a temperature set between 50 and 70°C, and preferably between 55 and 65°C.

Advantageously, the final solution can be subject to a step of concentration to obtain a solution with a determined concentration of iron sulphate, in particular by means of evaporation exploiting the heat developed during the first and the second reaction.

Advantageously, the final solution is subject to filtering obtaining:
- iron sulphate,
- mother water that is cycled upstream of the process because it can take part again to said first and/or second reaction.

A plant for making iron sulphate by a solution of sulphuric acid comprises:
- means for causing the above described solution to react with a measured amount of iron scale,
- means for causing the above described solution to react with scrap iron,
- a crystallizer where a final solution exiting from said means where the iron sulphate is the only iron based compound and is separated from the mother water.

In a first exemplary embodiment, said means for causing the above described solution to react with a measured amount of scale comprises a first reactor, and said means for causing the above described solution to react with a measured amount of scrap iron comprises a second reactor downstream of the first reactor.

In a second exemplary embodiment, said means for causing the above described solution to react with a measured amount of scale and said means for causing the above described solution to react with a measured amount of scrap iron, comprises a single reactor.

The invention will now be described in a way not limitative, through the following examples from 1 to 4.

### Example 1

In a process carried out as now described, exhausted acid is used coming from the production of titanium dioxide by the sulphate process. In particular, 2000 ml of a sulphuric acid solution, like that indicated in Tab. 1 below, are put into a 4 1 container with a diameter of 120 mm, having a stirrer with helical blade of 60 mm rotating at 300 rpm.

**Tab. 1**

| Element | MU | Amount |
|---|---|---|
| Free acidity | g/l | 298 |
| Fa | g/l | 20 |
| Mg, Ti, Al | g/l | 8-12 |
| Mn, Cr, Ni, Zn | ppm | Less than 700 |

The temperature is chosen at the minimum value of 70°C; to achieve the temperature chosen 500 g of Fe₃O₄ scale are added. After 8-10 minutes the temperature achieves 80°C and is maintained for 40' without further heating.

The solution, clear and without precipitates, is then caused to decant for some minutes to separate the scale not reacted and then transferred into a container similar to the previous one, where 200 g of scrap iron pieces of small size are added.

The reaction proceeds naturally at 70-75°C up to reaching the limit of solubility of the iron sulphate at 70°C, when the solution is transferred into a small crystallizer having a stirrer for controlling the granulometry of the crystals (between 0,1 and 1 mm). Then, by cooling up to 1°C, about 1300 g of iron sulphate heptahydrate are obtained and 840 ml of mother water are separated. The volume passes from 2.000 to 840 ml owing to evaporation (concentration) due to exothermicity of the above reaction, in addition to the subtraction of water of crystallization from the iron sulphate heptahydrate. The crystals obtained are FeSO₄·7H₂O at 92,8% with a 18,4% Fe content, for whose production 255 g of Fe₃O₄ and 76,6 g of Fe have been consumed.

The following table shows the iron consumption referred to 1.000 g of iron sulphate heptahydrate:

| Fe origin | for 1,3kg FeSO₄·7H₂O | Fe for 1 kg FeSO₄·7H₂O | (%) |
|---|---|---|---|
| Fe₃O₄ | 255=184,46 Fe | 141.89 | 70,7 |
| Fe | 76,6 | 58,9 | 29,3 |

In the many reactions carried out the mother water and the amount of Fe are comprised in the following ranges:

| Element | MU | Amount |
|---|---|---|
| H₂SO₄ | g/l | 120-140 |
| Fe | g/l | 35-40 |

The heat provided is only that necessary for heating the solution up to 80°C starting from room temperature, before adding the iron scale, whereas for all the remainder of the process no energy is added.

### Example 2

The process is similar to that described in example 1, except from the composition of the starting solution that is:
- 910 ml of exhausted acid
- (Composition of Tab. 1)
- 840 ml of mother water (Example 1)
- 250 g of H₂SO₄ diluted in 114 g of H₂O

The reactions are completely similar to those of Example 1 giving rise to a continuous process with total absence of transfers of by-products to submit to successive treatments, whose limit is exclusively the tolerances on the impurities.

### Example 3

The process is similar to that described in example 1 concerning the reaction with the iron scale and then the reduction with scrap iron, but instead of transferring the solution in the crystallizer and the subsequent liquid-solid separation by cooling, the still clear solution is transferred in another container and its temperature is set at 72°C, the rotation of the stirrer is lowered to 70 rpm and the solution is left to evaporate for 90 minutes during which a whitish precipitate is formed.

Then the reaction ceases, the product obtained is filtered that, subject to analysis, is iron sulphate monohydrate.

### Example 4

Use of exhausted pickling solution with sulphuric acid, where 1.000 ml of exhausted solution coming from pickling iron products are put into a 4 1 container with a diameter of 120 mm, having stirrer with helical blade of 60 mm rotating at 200 rpm. The composition of the solution is given in Tab. 2.

**Tab. 2**

| Element | MU | Amount |
|---|---|---|
| Free acidity | g/l | 350-370 |
| Fe | g/l | 100-110 |
| Mn, Cr, Ni, Zn, Cu etc. | ppm | Less than 1.200 |

The temperature of the reaction has been set at the minimum value of 70° and then 250 g of Fe₃O₄ have been added. After 8-10 minutes the temperature reaches 80° that are maintained without further supply of heat for 15-20'.

The solution, still without precipitate, is caused to decant for some minutes to separate the scale not reacted and transferred into a container similar to the previous, where 100 g of scrap iron of small size are added. The reaction proceeds naturally at 70-75° up to reaching the limit of solubility of the iron sulphate at 70°, when the solution is transferred into a small crystallizer having a stirrer for controlling the granulometry of the crystals (between 0,1 and 1mm).

Cooling up to 1°C about 652 g of iron sulphate heptahydrate are obtained, for whose production, in addition to the iron already contained in the starting solution, only 54.18 g of Fe₃O₄ and 13,06 g of Fe. The table indicates the sources of supply of iron:

| Fe supply | for 652g of FeSO₄·7H2O | Fe for 1.000 g of FeSO₄·7H2O | (%) |
|---|---|---|---|
| Fe₃O₄ | 54,18=39,19 of Fe | 60,10 | 75 |
| Fe | 13,06 | 20,03 | 25 |

### Brief description of the drawings

The invention will now be shown with the following description of an exemplary embodiment of a plant, exemplifying but not limitative, with reference to the attached drawings wherein:
- Figure 1 shows diagrammatically a flow sheet of a process in a plant for making iron sulphate, according to the invention;
- Figure 2 shows diagrammatically a flow sheet of a process in a plant for making iron sulphate alternative to that of figure 1.

### Description of preferred exemplary embodiments.

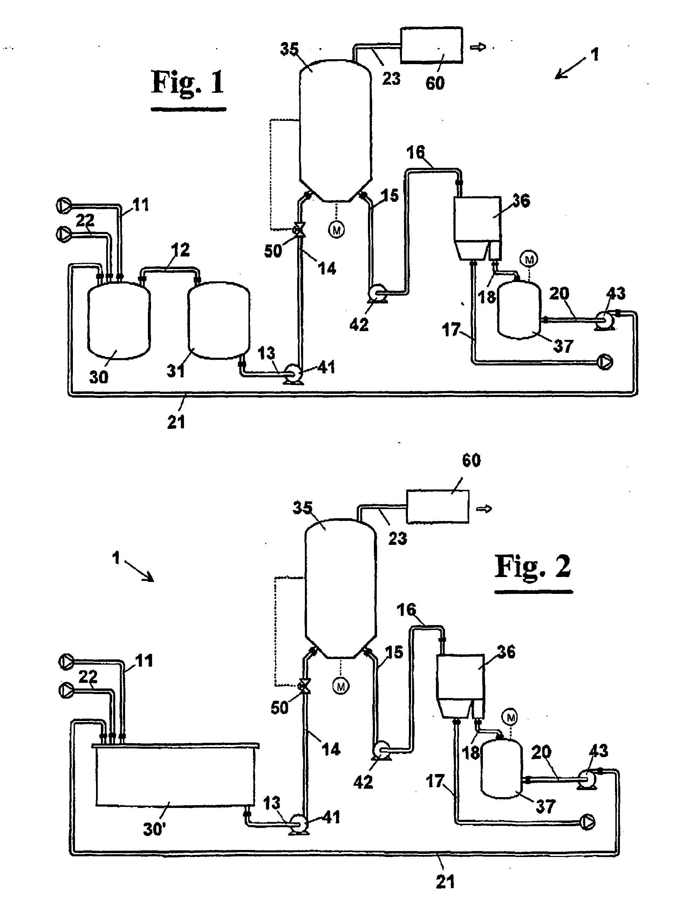

With reference to figure 1, a plant for making iron sulphate, according to the invention, provides a first reactor 30 where, by ducts 11 and 22, a starting solution containing sulphuric acid in a measured concentration is supplied. The starting solution, for example an exhausted solution deriving from the industry for making titanium dioxide, reacts with iron scale previously put into reactor 30. At the end of the reaction an intermediate solution is obtained comprising iron sulphate and ferric sulphate. This is then supplied, by a duct 12, in a second reactor 31 where it reacts with scrap iron in it present. More in detail, the ferric sulphate present in the intermediate solution reacts with the scrap iron and turns into iron sulphate (FeSO₄), whereby in the resulting solution the iron sulphate is the only iron based compound. To avoid the crystallization of iron sulphate the second reaction is stopped near the limit of solubility of the iron sulphate in its mother water. From the reactor 31 the intermediate solution is then transferred by a pump 41 to a crystallizer 35 having a stirrer and connected to a vacuum system 60 by a duct 23. The feeding step of the final solution to the crystallizer 35 is controlled by a valve 50, arranged along duct 14 which leads to reactor 31. In crystallizer 35 the granulometry of the crystals is checked to remain within predetermined values set between 0.1 and 1 mm. Once cooled up to a predetermined temperature, the final solution is transferred by a pump 42 to a centrifugal machine 36 in which the separation is obtained of the mother water from the iron sulphate heptahydrate crystals. The mother water is then sent to a reservoir 37 and then cycled upstream of the process 1 by a pump 43.

In figure 2 an alternative process is shown like to that above described to prepare iron sulphate heptahydrate. The essential difference between the two processes consists of the mode with which the two principal reactions are made. More in detail, in the process shown in figure 2 the two reactions are carried out in a single reservoir. This exemplary embodiment represents an intermediate case between the processes of prior art and the process of figure 1. In fact, according to the invention, it is possible also in this case to reduce the amount of scrap iron that can be used to prepare iron sulphate with respect to the processes of prior art. Furthermore, the use of a single reactor 30' instead of two distinct reactors 30 and 31 of the first embodiment represents a simplified structure of the plant with subsequent reduction of the costs. However, the first exemplary embodiment has a higher efficiency concerning the lower amount of scrap required.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Process for making iron sulphate comprising the steps of:
- adding a measured amount of iron scale (Fe₃O₄) to a starting solution containing sulphuric acid (H₂SO₄) causing the sulphuric acid and the iron scale (Fe₃O₄) to react with each other and to form an intermediate solution comprising iron sulphate (FeSO₄) and ferric sulphate (Fe₂(SO₄)₃),
- stopping said first reaction near the limit of solubility at the temperature of the process;
- adding scrap iron to said intermediate solution causing said intermediate solution to react with the scrap iron turning the present ferric sulphate (Fe₂(SO₄)₃) into iron sulphate (FeSO₄), whereby in the final solution the iron sulphate (FeSO₄) is the only iron based compound.

2. Process according to claim 1, wherein said first and second reactions are carried out separately, in particular for said two reactions different times and reactors are provided.

3. Process according to claim 1, wherein said starting solution is selected from the group comprised of:
- waste material from the industry for making titanium dioxide,
- exhausted solutions of various nature containing acid fractions
- fresh acid.

4. Process according to claim 1, wherein said first reaction is carried out at a temperature set between 60 and 95°C, in particular between 70 and 90°C and preferably between 75 and 85°C.

5. Process according to claim 1, wherein after said second reaction the final solution is cooled at a temperature set between 50 and 70°C and, in particular between 55 and 65°C.

6. Process according to claim 1, wherein said final solution is subjected to a step of concentration to obtain a solution with a predetermined concentration of iron sulphate, in particular obtained for evaporation exploiting the heat developed during said first and/or said second reaction.

7. Process for making iron sulphate, according to claim 1, wherein said final solution is subject to filtering obtaining:
- iron sulphate,
- a mother water that is cycled upstream of the process because to take part again to said first and/or second reaction.

## Patentansprüche

1. Verfahren zur Herstellung von Eisen-(II)-sulfat, umfassend die folgenden Schritte:
- Zugeben einer abgemessenen Menge Magnetit (Fe₃O₄) zu einer Ausgangslösung, die Schwefelsäure (H₂SO₄) enthält, wodurch bewirkt wird, dass die Schwefelsäure und der Magnetit (Fe₃O₄) miteinander reagieren und eine Zwischenlösung bilden, die Eisen-(II)-sulfat (FeSO₄) und Eisen-(III)-sulfat (Fe₂(SO₄)₃) umfasst,
- Anhalten der ersten Reaktion nahe der Löslichkeitsgrenze bei der Temperatur des Verfahrens;
- Zugeben von Alteisen zu der Zwischenlösung, wodurch bewirkt wird, dass die Zwischenlösung mit dem Alteisen reagiert, sodass das vorhandene Eisen-(III)-sulfat (Fe₂(SO₄)₃) in Eisen-(II)-sulfat (FeSO₄) umgewandelt wird, wodurch das Eisen-(II)-sulfat (FeSO₄) in der endgültigen Lösung die einzige auf Eisen basierende Verbindung ist.

2. Verfahren nach Anspruch 1, wobei die erste und die zweite Reaktion separat ausgeführt werden und insbesondere für die zwei Reaktionen unterschiedliche Zeiten und Reaktoren bereitgestellt werden.

3. Verfahren nach Anspruch 1, wobei die Ausgangslösung ausgewählt ist aus der Gruppe bestehend aus:
- Abfallmaterial aus der Titandioxid-Herstellungsindustrie,
- erschöpften Lösungen unterschiedlicher Beschaffenheit, die Säurefraktionen enthalten;
- frische Säure.

4. Verfahren nach Anspruch 1, wobei die erste Reaktion bei einer Temperatur ausgeführt wird, die zwischen 60 und 95 °C, insbesondere zwischen 70 und 90 °C und vorzugsweise zwischen 75 und 85 °C eingestellt ist.

5. Verfahren nach Anspruch 1, wobei die endgültige Lösung nach der zweiten Reaktion bei einer Temperatur abgekühlt wird, die zwischen 50 und 70 °C und insbesondere zwischen 55 und 65 °C eingestellt ist.

6. Verfahren nach Anspruch 1, wobei die endgültige Lösung einem Konzentrationsschritt unterzogen wird, um eine Lösung mit einer vorbestimmten Konzentration Eisen-(II)-sulfat zu erhalten, die insbesondere zur Nutzung bei der Verdampfung von Wärme erhalten wird, die sich während der ersten und/oder der zweiten Reaktion entwickelt.

7. Verfahren zur Herstellung von Eisen-(II)-sulfat nach Anspruch 1, wobei die endgültige Lösung einer Filterung unterzogen wird, bei der Folgendes erhalten wird:
- Eisen-(II)-sulfat,
- eine Mutterlauge, die stromaufwärts des Verfahrens zurückgeschickt wird, um erneut an der ersten und/oder zweiten Reaktion teilzunehmen.

## Revendications

1. Procédé de préparation de sulfate de fer comprenant les étapes consistant à :
- ajouter une quantité mesurée de paille de fer (Fe₃O₄) à une solution de départ contenant de l'acide sulfurique (H₂SO₄) provoquant la réaction de l'acide sulfurique et de la paille de fer (Fe₃O₄) l'un avec l'autre et pour former une solution intermédiaire comprenant du sulfate de fer (FeSO₄) et du sulfate ferrique (Fe₂(SO₄)₃),
- stopper ladite première réaction proche de à limite de solubilité à la température du procédé ;
- ajouter de la paille de fer à ladite solution intermédiaire, provoquant la réaction de ladite solution intermédiaire avec la paille de fer, transformant le sulfate ferrique (Fe₂(SO₄)₃) présent en sulfate de fer (FeSO₄), le sulfate de fer (FeSO₄) étant l'unique composé base de fer présent dans la solution finale.

2. Procédé selon la revendication 1, dans lequel lesdites première et seconde réactions sont réalisées de manière séparée, en particulier pour lesdites deux réactions, différents temps et réacteurs sont fournis.

3. Procédé selon la revendication 1, dans lequel ladite solution de départ est sélectionnée dans le groupe constitué par :
- un matériau de déchet provenant de l'industrie de la production de dioxyde de titane,
- des solutions épuisées de diverses natures contenant des fractions acides,
- un acide frais.

4. Procédé selon la revendication 1, dans lequel ladite première réaction est réalisée à une température réglée entre 60 et 95 °C, en particulier entre 70 et 90 °C, et de préférence entre 75 et 85 °C.

5. Procédé selon la revendication 1, dans lequel après ladite seconde réaction, la solution finale est refroidie à une température réglée entre 50 et 70 °C, et en particulier entre 55 et 65 °C.

6. Procédé selon la revendication 1, dans lequel ladite solution finale est soumise à une étape de concentration pour obtenir une solution ayant une concentration prédéterminée de sulfate de fer, en particulier obtenue pour une évaporation exploitant la chaleur développée pendant ladite première et/ou ladite seconde réaction.

7. Procédé de préparation de sulfate de fer selon la revendication 1, dans lequel ladite solution finale est soumise à une filtration donnant :
- du sulfate de fer,
- une eau mère qui est recyclée en amont du procédé pour prendre de nouveau part dans ladite première et/ou ladite seconde réaction.
